# EUROPEAN PATENT APPLICATION

(11) **EP 4 800 212 A2**
(43) Date of publication of application: **02.09.2026**
(21) Application number: 26191196.0
(22) Date of filing: 23.02.2023
(51) Int. Cl.: E05F 1/12

(54) **HINGE ASSEMBLY, AS WELL AS STORAGE COMPARTMENT OR MONUMENT FOR INSTALLATION IN AN AIRCRAFT OR SPACECRAFT CABIN**

(62) Document number(s) of the earlier application(s) in accordance with Art. 76 EPC: 23158271.9 / 4 420 980
(71) Applicant: Airbus Operations GmbH, 21129 Hamburg (DE)
(72) Inventor: WENG, Alexander, 21129 Hamburg (DE); HOGH, Robert, 21129 Hamburg (DE)
(74) Representative: Isarpatent

(57) **Abstract**

A hinge assembly (1) for pivotably coupling two components in an aircraft or spacecraft cabin, in particular for pivotably attaching a door (107) of an overhead storage compartment (102). The hinge assembly comprises a first (2) and second (3) hinge part arranged and coupled so as to be pivotable relative to each other about a hinge axis (A), an elastic element (5) capable of providing an elastic torque about the hinge axis (A), and a torque-adjustment piece (6). The elastic element is coupled to each of first hinge part and torque-adjustment piece in a torque-transmitting manner. The hinge assembly includes a positive engagement device (7) configured to be kept positively engaged by elastic action so as to prevent a rotation of the torque-adjustment piece at least in a first direction of rotation (R1), and capable of being disengaged against the elastic action so as to enable a rotation of the torque-adjustment piece in a second direction of rotation (R2) opposite to the first direction of rotation (R1) against a torque provided by the elastic element in order to apply a torsional pre-load to the elastic element. As the positive engagement device, the hinge assembly comprises a ratcheting mechanism configured in the manner of a ratcheting mechanism of a ratcheting wrench, including an arrangement of teeth and a ratchet pawl. Further, a storage compartment (102) or monument.

## Description

### TECHNICAL FIELD OF THE INVENTION

The present invention relates to a hinge assembly for pivotably coupling two components in an aircraft or spacecraft cabin, in particular for pivotably attaching a door of an overhead storage compartment. Further, the invention relates to a storage compartment or monument for installation in an aircraft or spacecraft cabin, comprising two components pivotably coupled to each other by a such a hinge assembly.

### TECHNICAL BACKGROUND

Even though the invention may be useful for pivotable coupling components of various types within an aircraft or spacecraft cabin, the invention and the underlying problem will be explained in the following with respect to a so-called overhead storage compartment in a passenger aircraft cabin, but without limiting the invention to that effect.

In the cabin of a passenger aircraft, compartments are usually provided which enable the passengers to stow smaller items of luggage, in particular hand baggage, pieces of clothing such as jackets, and other similar items, during flight. It is known to install such compartments in rows above the passenger seats and in a manner enabling access to these compartments from the aisle which provides access to the seats. Storage devices of this type are commonly designated as overhead storage compartments (OHSC) or overhead storage bins.

An exemplary overhead storage compartment is described, for instance, in DE 10 2020 109 169 A1.

It is known to provide each OHSC with a door that is connected to a fixed portion of the compartment via one or more hinge(s) and is kept closed using a latching device. When the latching device is operated by a passenger or crew member, the door is released and automatically opens by means of an elastic device that may be part of a hinge assembly. The elastic device also keeps the compartment door open during boarding.

The compartment doors may not all be of the same size. Specifically, numerous different OHSC door sizes may be present in a specific aircraft, and hence, the door weight may vary considerably. Cabin customization may result in additional variations of the weight of individual OHSC doors. However, it is desired that all OHSC doors within the cabin should automatically open at substantially the same speed when the latching device is released. In order to obtain the same opening speed at each door, it is known to adapt the moment provided by the elastic device.

Several approaches have been proposed to provide an elastic torque adapted to the OHSC door weight.

For instance, a dedicated hinge version may be provided for each of the numerous different door versions, providing different moment. This, however, makes part steering complex and expensive and increases the need for documentation. During the process of installing the OHSC doors in the cabin, it is not possible to respond to tolerances in door weight. Weight tolerances therefore need to be tightened to a minimum, which also increases cost.

Further, in EP 2 405 090 B1, for example, a hinge has been proposed which comprises a spring that provides a torsional moment about the swiveling axis of the hinge. The hinge is configured to enable adjustment of the torsional moment via a worm drive. The hinge proposed in EP 2 405 090 B1 is quite compact, but is comparatively expensive and complex with multiple movable parts, and adjustment of the moment is less easy than desirable.

Also, a hinge embedded in the compartment sidewall has already been proposed, which contains complex kinematics in order to provide a specific force-way relation. This hinge is comparatively spacious, complex and expensive.

Other hinges are described, in connection with baggage compartments, in EP 2 198 103 B1, EP 1 217 158 A2 and DE 298 08 910 U1, for example.

### SUMMARY OF THE INVENTION

In view of the background outlined above, it is an object of the invention to provide a compact hinge assembly with adjustable torque, which has a simpler structure, can be produced and assembled at reduced cost, and enables easy adjustment of the torque during installation.

This problem is solved by a hinge assembly having the features of claim 1 and/or by a storage compartment or monument having the features of claim 10.

The invention proposes a hinge assembly for pivotably coupling two components in an aircraft or spacecraft cabin, in particular for pivotably attaching an openable and closeable door of an overhead storage compartment, wherein the hinge assembly solves the problem to be solved.

The hinge assembly comprises a first hinge part and a second hinge part arranged and coupled so as to be pivotable relative to each other about a hinge axis, an elastic element capable of providing an elastic torque about the hinge axis, and a torque-adjustment piece. One of the first and second hinge parts is adapted to be attached to a first one of the components and the other one of the first and second hinge parts is adapted to be attached to a second one of the components.

The elastic element is coupled to each of the first hinge part and the torque-adjustment piece in a torque-transmitting manner. In accordance with the invention, the hinge assembly includes a positive engagement device that is configured to be kept positively engaged by elastic action so as to prevent a rotation of the torque-adjustment piece about the hinge axis relative to the second hinge part at least in a first direction of rotation. Further, in accordance with the invention, the positive engagement device is capable of being disengaged against the elastic action so as to enable a rotation of the torque-adjustment piece about the hinge axis relative to the second hinge part in a second direction of rotation opposite to the first direction of rotation against a torque provided by the elastic element in order to apply a torsional pre-load to the elastic element.

Moreover, the invention provides a storage compartment or monument for installation in an aircraft or spacecraft cabin, comprising two components pivotably coupled to each other by such a hinge assembly, wherein the storage compartment or monument solves the problem to be solved.

It is an idea of the present invention to provide a hinge assembly of simple design including a self-locking adjustability mechanism implemented using a small number of parts. In this manner, advantageously, a hinge assembly of compact size and low weight is provided which can be manufactured and assembled at low cost. The hinge assembly proposed by the invention is robust and hence particularly useful for application in an aircraft or spacecraft. More specifically, as the torque-adjustment piece can be retained in a locking position by elastic action such as elastic force and/or torque, the adjustment mechanism is quite insensitive to vibration, e.g. during flight, and thus robust with respect to misalignment by vibration.

With the present invention, the number of different hinge types or hinge versions within the cabin can be considerably reduced. Preferably, it becomes possible to use a single adjustable hinge type for all OHSC doors in the cabin. This significantly simplifies part steering, reduces the effort necessary to ensure that the correct hinge is used for each door, and reduces complexity in the final product. The moment provided by the elastic element can be adjusted from the lowest to the highest OHSC door weight. Thus, repercussions of weight tolerances can be considerably reduced, which makes it possible to further reduce cost, e.g. secondary cost incurred due to the manufacturing methods used to produce the doors. The invention thus makes it possible to respond both to weight tolerances and to weight changes due to customization by adjusting the moment provided by the elastic element in a simple, easy manner, with a single type of hinge assembly having a single part number.

Furthermore, the torque adjustability afforded by the invention may make it possible to select even a substantially zero torsional pre-load, which may be advantageous if the hinge assembly is used for a very small and light OHSC door.

Advantageous improvements and developments of the invention are contained in the dependent claims as well as in the description referring to the drawings.

In particular, an increasing angle of rotation of the torque-adjustment piece in the second direction of rotation increases the torsional pre-load applied to the elastic element.

In a development, the positive engagement device is a ratchet device that is capable of preventing the rotation of the torque-adjustment piece about the hinge axis relative to the second hinge part in the first direction of rotation, and that enables the rotation of the torque-adjustment piece about the hinge axis relative to the second hinge part in the second direction of rotation against the torque provided by the elastic element. An automatic positive locking in the first direction of rotation can hence be implemented in a simple and reliable manner. A ratchet device allows easy adjustment of the torque provided by the elastic element.

In a development, the positive engagement device is configured to enable selective release of the torque-adjustment piece for rotation thereof about the hinge axis relative to the second hinge part in the first direction of rotation and thereby to enable resetting the torsional pre-load applied to the elastic element. This makes it possible to easily correct the torque provided by the elastic element, e.g. in case testing reveals during installation that the pre-load chosen is higher than desired for a specific door. The pre-load may be resettable to zero in this manner.

In a development, the torque-adjustment piece is configured to be rotated relative to the second hinge part about the hinge axis manually and/or using a standard tool. Manual rotation of the torque-adjustment piece to set the pre-load further facilitates the installation process, as no tool is then required for pre-loading. Rotation of the torque-adjustment piece using a standard tool may be useful if the pre-load is too high for convenient manual rotation of the torque-adjustment piece.

In particular, it may be provided that rotating the torque-adjustment piece relative to the second hinge part requires the use of a tool, in particular of a standard tool such as a conventional screw driver. In this way, easy altering of the chosen pre-load by persons not intended to do so may be avoided.

In particular, the hinge assembly may comprise a pivot axle that is coupled or connected with the first hinge part in a torque-transmitting manner. Further, the second hinge part may comprise a bearing portion that at least partially accommodates the pivot axle in a pivotable manner. This may facilitate assembling the hinge assembly.

In a development, the pivot axle is formed as a sleeve and the elastic element is accommodated at least partially inside the sleeve. Such a hinge assembly is compact and the elastic element is accommodated in a space-saving and well-protected manner.

In a further development, the torque-adjustment piece is cap-shaped, comprises an inner space or axial recess and accommodates an end of the bearing portion of the second hinge part in the inner space or axial recess. In particular, the inner space or axial recess may comprise a substantially round inner cross-section, and the end of the bearing portion may comprise a substantially round outer cross-section. In this way, the torque-adjustment piece can be rotatably arranged on the bearing portion in a comparatively simple and compact manner.

In particular, a first end of the elastic element may be connected to the pivot axle in a manner so as to transmit torque about the hinge axis, and further, a second end of the elastic element may coupled to the torque-adjustment piece in a manner so as to transmit torque about the hinge axis.

For example, the elastic element may be a coil spring, in particular a helical torsion spring. Accordingly, elastic torque can be provided in an expendient manner.

In an improvement, the positive engagement device, in particular the ratchet device, comprises a first annular arrangement of teeth provided on the torque-adjustment piece and a second annular arrangement of teeth provided on the second hinge part, wherein the teeth of the first and second annular arrangements are configured to engage with each other to prevent relative rotation of the annular arrangements in the first direction of rotation and to slide along each other so as to allow relative movement of the annular arrangements in the second direction of rotation. In particular, the teeth of the first and second annular arrangements may each be provided with a sawtooth shape. In this manner, the torsional pre-load, and thus the torque or torsional moment provided by the hinge assembly during use, can be easily adjusted and reliably maintained.

In a development, the elastic element additionally provides an axial elastic force along the hinge axis as a tensional force so as to elastically bias the first and second arrangements of teeth against each other. In this way, the teeth can be reliably maintained in engagement to maintain the selected pre-load.

In particular, the first annular arrangement of teeth may in an improvement be formed on an inner peripheral shoulder of the torque-adjustment piece. This further contributes to a compact hinge assembly with a well-protected self-locking adjustment mechanism, in particular in the form of the ratchet device.

Furthermore, in an improvement, the second annular arrangement of teeth may be formed on an outwardly-oriented end section of the bearing portion of the second hinge part. In this improvement, the first annular arrangement of teeth on the torque-adjustment piece is oriented towards the bearing portion. Thus, the bearing portion can be used in advantageous and compact manner for implementing also a portion of the positive engagement device.

In an improvement, one of the second hinge part and the torque-adjustment piece is provided with a scale and the other of the second hinge part and the torque-adjustment piece is provided with an index, wherein the scale and the index cooperate to provide a scale reading that directly or indirectly indicates the torsional pre-load applied to the elastic element by rotating the torque-adjustment piece relative to the second hinge part. This advantageously makes it possible to provide the operator with information about the currently selected torsional pre-load. Hence, the operator can set the pre-load to a pre-defined value e.g. in accordance with mounting instructions for a given door. Further, this improvement facilitates checking whether the selected pre-load is correct. The adjusted pre-load is thus measurable and easily reproducible. The scale may in some variants be numbered, e.g. to indicate the pre-load in terms of steps or, alternatively, as an actual physical value.

According to a further improvement, the torque-adjustment piece is configured with an operating section, wherein using the operating section, the torque-adjustment piece can be axially moved, in particular pulled, by an operator along the hinge axis in order to disengage the positive engagement device for resetting the torsional pre-load. The pre-load can thus be easily reset and can then be set anew to a desired value.

In an improvement, the operating section may require the use of a tool, in particular a standard tool, by the operator in order to axially move the torque-adjustment piece. This may help to avoid pre-load resetting by persons not intended to do so.

In another development, the hinge assembly comprises a release element that is provided with a wedge-shaped portion, wherein the release element is movably arranged in such a way that the wedge-shaped portion can be pushed or pulled between an axial face of the torque-adjustment piece and an axial face of the second hinge part, in particular along a direction transverse to the hinge axis, in order to move the torque-adjustment piece and the second hinge part apart and thereby to reset the torsional pre-load. In this way, the torsional pre-load can be reset in a more convenient way.

In a development, the first annular arrangement of teeth is integrally formed with the torque-adjustment piece and the second annular arrangement of teeth is integrally formed with the second hinge part, more specifically with the bearing portion thereof. In this way, the positive engagement device can be produced in a convenient and expedient manner and the number of individual pieces is low. Accordingly, the cost of production of the hinge assembly is reduced and the possibility of individual pieces getting loose and lost is considerably reduced, too.

In a further development, the teeth of each of the first and second annular arrangements are disposed along a circular path and a peripheral profile of the interacting teeth of the first and second annular arrangements along the path is provided with a self-locking shape. In particular, both the forward face and the backward face of each tooth are inclined at an angle of less than 90 degrees with respect to a direction that is tangential with respect to the circular path at the location of the tooth. In this way, even if an axial or longitudinal tension provided by the elastic element is not sufficient to lock, or to lock to the extent desired, the torque-adjustment piece against rotation in the first direction, the torsional moment or torque provided by the elastic element about the hinge axis can be used to lock the tooth system. The angle of less than 90 degrees makes it possible to prevent an unwanted opening of the interacting sawtooth-shaped teeth arrangements.

In a development, the torque-adjustment piece may be formed from a synthetic material. Further, the first and second hinge parts may each be formed from a synthetic material. Also, the pivot axle may be formed from a synthetic material. The elastic element may be made from metal, e.g. a steel. In this way, expedient production of the hinge assembly at low cost is further facilitated.

In a further development, the hinge assembly may further comprise an additional elastic element configured and arranged so as to elastically apply an additional tensional load on the elastic element in a direction of stretching the elastic element along the hinge axis. In some embodiments, it may occur that the axial tension of the elastic element used to provide the torsional moment decreases with increasing torsion thereof. Increasing the torsional pre-load may in this case lead to a reduction of axial tension used as an axial elastic action to lock the positive engagement device. The additional elastic element may be used to provide a counter-measure and can be used to adjust the axial tension and axial length of the elastic element providing the torque.

In a variant, the positive engagement device may be configured to prevent, in an engaged state thereof, the rotation of the torque-adjustment piece about the hinge axis relative to the second hinge part in the first and second directions of rotation.

In accordance with another, alternative development, the hinge assembly may comprise a ratcheting mechanism as the positive engagement device, wherein the ratcheting mechanism is configured in the manner of a ratcheting mechanism of a ratcheting wrench. Such a ratcheting mechanism may, for example, include an arrangement of teeth and a ratchet pawl. In particular, such a ratcheting mechanism may be provided with a reverse mechanism that can be used to selectively enable the torque-adjustment piece to rotate about the hinge axis relative to the second hinge part in the first direction of rotation in order to reset the torsional pre-load applied to the elastic element. For example, in such an alternative variant, a release element with a wedge-shaped portion that can be pushed or pulled between axial faces of the torque-adjustment piece and second hinge part may be dispensed with.

The improvements, developments and enhancements of the invention may be arbitrarily combined with each other whenever this makes sense. Moreover, other possible enhancements, developments and implementations of the invention comprise combinations of features of the invention which have been described above or will be described in the following in relation to the detailed description of embodiments, even where such a combination has not been expressly mentioned.

### BRIEF SUMMARY OF THE DRAWINGS

The present invention is explained in more detail below with reference to the embodiments shown in the schematic figures:
- Fig. 1: shows an exemplary aircraft in which embodiments of the invention may be used;
- Fig. 2: shows a perspective view of exemplary overhead storage compartments which may be installed in the aircraft of Fig. 1;
- Fig. 3: displays an exploded perspective view of a hinge assembly in accordance with an embodiment of the invention;
- Fig. 4: displays a detail view of some components of the hinge assembly of Fig. 3;
- Fig. 5: shows a detailed view of a ratchet device of the hinge assembly of Fig. 3 in order to illustrate variants of the embodiment of Fig. 3;
- Fig. 6: displays a release element which may be used in a further variant of the hinge assembly of the embodiment of Fig. 3;
- Fig. 7: shows a detailed view of some components of a hinge assembly in accordance with a modification of the embodiment of Fig. 3;
- Fig. 8(a)-(c): show further variants of the embodiment of Fig. 3, each including an additional elastic element;
- Fig. 9: displays a perspective view of part of a hinge assembly in accordance with a further embodiment;
- Figs. 10-12: illustrate modifications of the embodiment of Fig. 9; and
- Fig. 13: illustrates a modification of the release element of Fig. 6.

In the figures of the drawing, elements, features and components which are identical, functionally identical and of identical action are denoted in each case by the same reference designations unless stated otherwise. The figures of the drawings are not necessarily drawn to scale.

### DESCRIPTION OF EXEMPLARY EMBODIMENTS

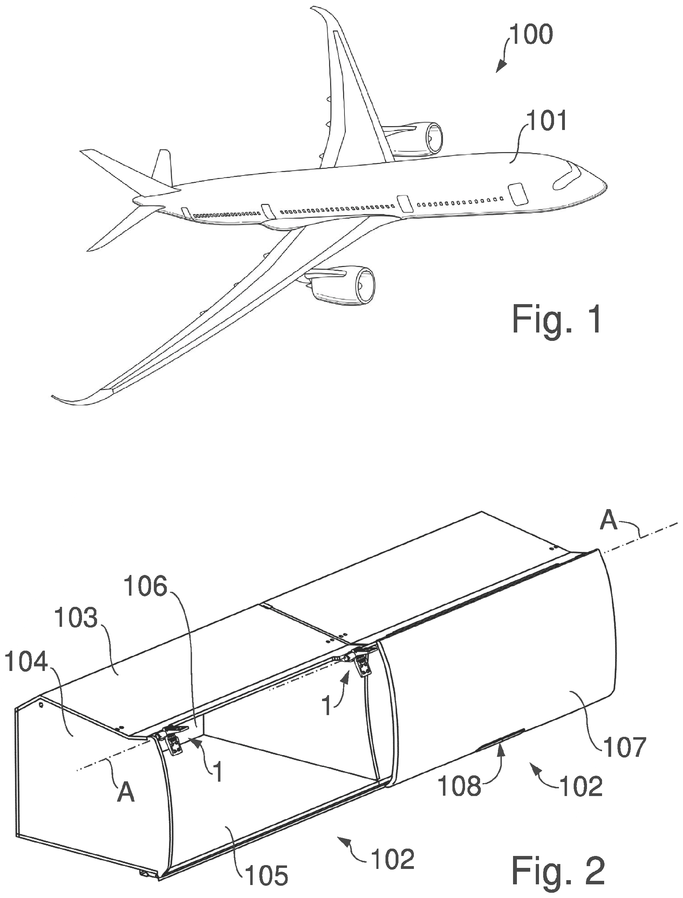

Fig. 1 shows an aircraft 100. The aircraft 100 is formed as a passenger airplane and comprises an elongate fuselage 101, which accommodates a passenger cabin, not shown in detail in the figures. Within the passenger cabin, seats are provided for the passengers, and overhead storage compartments are installed above the seats.

The passengers can stow their hand luggage as well as items of clothing such as jackets etc. in these overhead storage compartments.

An arrangement of two exemplary overhead storage compartments 102 is shown in Fig. 2, for illustration. The general overall shape of the compartments 102 in Fig. 2 as such corresponds to that of storage compartments shown in DE 10 2020 109 169 A1. Yet, the present invention may be used in connection with compartments shaped and/or arranged in various ways different from the exemplary configuration in Fig. 2.

Each compartment 102 in Fig. 2 comprises a top wall 103, side walls 104, a bottom wall 105 and a rear wall 106. At the front, which is substantially oriented towards an aisle within the cabin, each compartment 102 can be closed by a door 107. During flight, the door 107 is normally closed, while it is usually open during boarding so as to enable passengers to stow items therein. In Fig. 2, only one compartment 102 is shown with its door 107 in a closed state. For the adjacent compartment 102, the door has been removed for purposes of illustration. Each door 107 is attached on the upper wall 103 using two hinge assemblies 1. The hinge assemblies 1 enable the door 107 to pivot about a substantially horizontal hinge axis A. In cooperation, the hinge assemblies 1 are capable of providing a torque about the hinge axis A which safely keeps the doors 107 open during boarding. For closing, the door 107 is pivoted about the axis A against the torque provided by the hinge assemblies 1. When a closed door 107 is opened by operating a latching device 108, which latches the door 107 in the closed position, the door 107 automatically swings open under the action of the torque provided by the hinge assemblies 1.

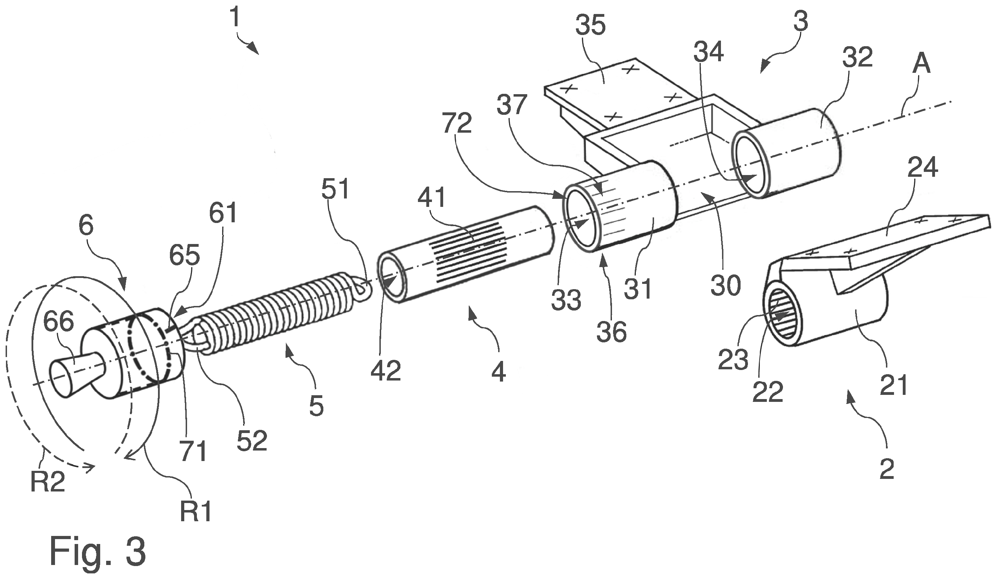

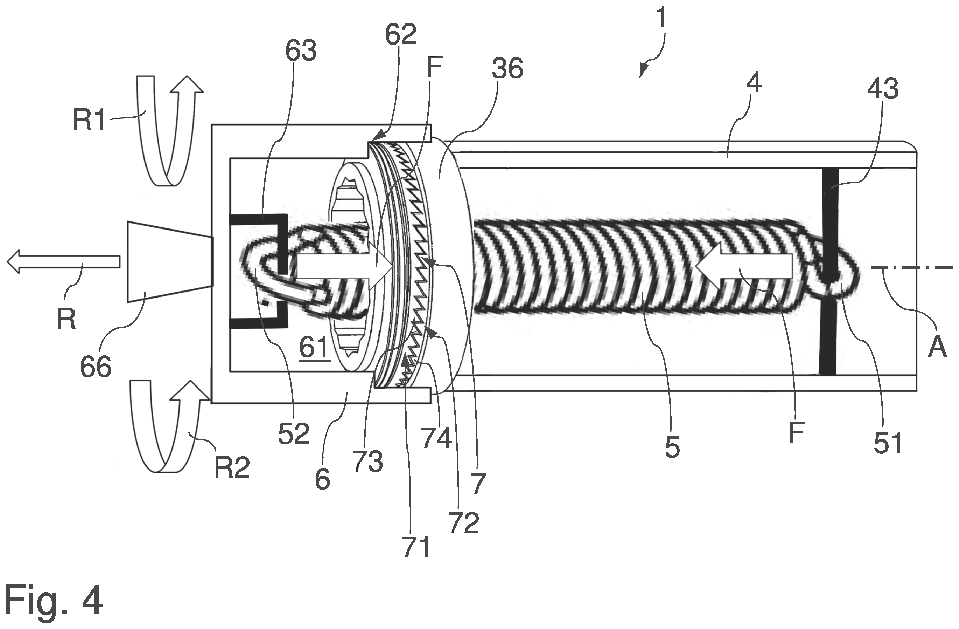

The compartments 102 shown in Fig. 2 use substantially identical hinge assemblies 1 for mounting the doors 107. Two hinge assemblies 1 are provided for each door 107 in Fig. 2. A hinge assembly 1 in accordance with an embodiment of the present invention will be described in the following with reference to Figs. 3 and 4.

The hinge assembly 1 comprises a first hinge part 2 and a second hinge part 3 that are coupled in order to pivot relative to each other about the hinge axis A. Specifically, the first hinge part 2 is configured to be attached to the door 107, and the second hinge part 3 is configured to be attached to the upper wall 103 near a forward edge thereof.

The first hinge part 2 comprises a sleeve-shaped receiving portion 21 comprising a passage 22. The passage 22 is provided with an internal toothing or internal arrangement of grooves 23. Further, a plate-shaped attachment section 24 is integrally connected to the receiving portion 21. The section 24 is adapted to enable the attachment to the door 107 and may e.g. be provided with fastening holes.

The second hinge part 3 comprises a first bearing portion 31 and a second bearing portion 32 spaced apart from each other along the hinge axis A by a distance, in order to form a space 30 which enables the receiving portion 21 of the first hinge part 2 to be arranged between the bearing portions 31 and 32. The bearing portion 31 is sleeve-shaped and comprises a passage 33, the bearing portion 32 is sleeve-shaped and comprises a passage 34, and the passages 33 and 34 are substantially coaxial with each other and with the hinge axis A. Each passage 33, 34 has a substantially circular internal cross-section.

The second hinge part 3 further comprises a partially plate-shaped attachment section 35 which is integrally connected to the bearing portions 31 and 32. The attachment section 35 may e.g. be adapted for being attached at a forward edge of the top wall 103, for example, and may also be provided with fastening holes. Alternatively, the attachment section 35 may be provided with a quick release interface that enables releasable fastening of the section 35 on the compartment 102, e.g. on the top wall 103.

Each of the first and second hinge parts 2 and 3 is preferably integrally moulded from a synthetic material, for example by injection moulding.

The hinge assembly 1 further comprises a sleeve-shaped pivot axle 4, which may also be integrally formed from a synthetic material, e.g. by injection moulding. An outer surface of the pivot axle 4 is substantially cylindrical and is smooth in both end regions of the pivot axle 4. In a center section of the pivot axle 4, the outer surface thereof is provided with an outer toothing or outer arrangement of ribs 41, which corresponds with the internal toothing or arrangement of grooves 23 of the first hinge part 2.

The pivot axle 4 can be inserted into the bearing portions 31, 32 and the receiving portion 21, when the portions 21, 31, 32 are coaxially arranged along the axis A. In this manner, the toothings or arrangements 23 and 41 connect the pivot axle 4 and the first hinge part 2 in a torque-transmitting manner. Meanwhile, the outwardly smooth end sections of the pivot axle 4 are pivotably received in the passages 33 and 34, respectively, which are internally smooth.

The pivot axle 4 also has a central passage 42. An elastic element 5, which is formed from a metal material and is provided in the form of a coil spring, more specifically a helical torsion spring, is accommodated in the passage 42 of the pivot axle 4.

The elastic element 5 comprises first and second ends 51 and 52 which are shaped in such a manner as to enable the introduction of torque, or torsional moment, about the hinge axis A and of tensional force along the axis A into the elastic element 5. The first end 51 is connected to the pivot axle 4 in a manner so as to transmit torque about the hinge axis A, see Fig. 4, for example using a holding element 43 such as a pin or a hook.

The hinge assembly 1 further comprises a cap-shaped torque-adjustment piece 6 comprising an inner space 61 in the form of a recess that axially extends into the torque-adjustment piece 6. Preferably, the torque-adjustment piece 6 is integrally formed from a synthetic material, too, e.g. by injection moulding.

After the hinge assembly 1 has been completely assembled, the torque-adjustment piece 6 is coupled with the second end 52 of the elastic element 5 in a manner enabling to transmit torque about the hinge axis A. In this assembled state, the inner space or recess 61 peripherally encompasses an axial portion of an end section 36 of the first bearing portion 31. Near its outward opening towards the first bearing portion 31, the inner space 61 is provided with a substantially cylindrical inner surface. Moreover, an outer surface of the end section 36 of the first bearing portion 31 is substantially cylindrical. In this manner, the torque-adjustment piece 6 can be rotatably mounted on the first bearing portion 31, and can be rotated about the hinge axis A relative to the first bearing portion 31. The torque-adjustment piece 6 is accordingly arranged in the manner of a rotatably mounted end cap on the bearing portion 31.

The elastic element 5 provides an elastic torque about the hinge axis A in order to automatically open the door 107 in Fig. 2 when the latching device 108 is released. In order to implement this, the elastic element 5 is coupled to both the first and second hinge parts 2, 3 in the manner described in the following. The parts 2, 3 can be moved by external torque relative to each other against the elastic torsional moment or torque provided by the elastic element 5, and move the parts 2, 3 relative to each other by action of the elastic torque when the external torque is removed. In order to take account of differing weights of different doors 107, the elastic torque provided by the elastic element 5 can be adjusted in the hinge assembly 1 by adding a torsional pre-load. The pre-load can be varied in order to result in a desired opening speed of the door 107.

The hinge assembly 1 includes a positive engagement device 7 which is formed, in the embodiments of Figs. 3-4, as a ratchet device.

The positive engagement device 7 includes a first annular arrangement 71 of teeth 73 formed on an inner peripheral shoulder 62 of the torque-adjustment piece 6. Even though in Fig. 4, which illustrates details of the arrangement 71, the first annular arrangement 71 is displayed as being formed on a separate piece that is joined to the torque-adjustment piece 6 in the region of the shoulder 62, it is preferred that the first annular arrangement 71 of teeth 73 be integrally formed with the torque-adjustment piece 6 at the shoulder 62 thereof.

Moreover, the positive engagement device 7 comprises a second annular arrangement 72 of teeth 74 formed on an outer end of the outwardly-oriented end section 36 of the first bearing portion 31 of the second hinge part 3. Preferably, the second annular arrangement 72 of teeth 74 is integrally formed with the first bearing portion 31.

The first annular arrangement 71 is oriented towards the first bearing portion 31, and the second annular arrangement 72 is oriented toward the torque-adjustment piece 6. Accordingly, the teeth 73 and 74 are oriented towards each other for engagement thereof. Fig. 4 shows that the teeth 73 and the teeth 74 are correspondingly shaped. Seen in the circumferential direction about the hinge axis A, the teeth 73, 74 are formed with a sawtooth profile.

Fig. 4 further shows that the torque-adjustment piece 6 comprises, within the inner space or recess 61, a holding element 63 such as a pin or hook. The holding element 63 is only schematically shown in Fig. 4 and connects the second end 52 of the elastic element 5 in a torque-transmitting manner to the torque-adjustment piece 6. In Fig. 4, the elastic element 5 extends from the first bearing portion 31, out of the passage 42 of the pivot axle 4 and into the inner space 61 of the torque-adjustment piece 6, through the annular arrangements 71, 72.

Also, the elastic element 5 is arranged and connected to the pivot axle 4 and to the torque adjustment piece 6 in a manner which enables the elastic element 5 to push the annular arrangements 71 and 72 against each other by an elastic tensional force F, see Fig. 4. In the engaged state of the device 7, the elastic element 5 is hence in particular axially stretched to some extent.

Fig. 3 further shows that the first bearing portion 31 is provided, on an outer peripheral surface thereof in the end section 36, with a scale 37. Even though this is not shown in Fig. 3, the scale 37 may include markings as well as an indication of steps which may be numbered, for example. Alternatively, a numerical indication of the actual pre-load applied, for example in terms of Newton meters, could be provided. On the torque-adjustment piece 6, for example on an outer peripheral surface thereof, too, an index 65 is provided. However, in variants, an inverse configuration is conceivable, with a scale provided on the torque-adjustment piece 6 and an index on the bearing portion 31.

The operation of the hinge assembly 1 for adjusting the pre-load and thereby adjusting the hinge assembly 1 for use with a specific door 107 will now be described.

The elastic element 5 is mounted inside the pivot axle 4 and the torque-adjustment piece 6 in such a way that in a pre-defined rotational position of the elements 4 and 6 relative to each other and/or at a pre-defined torque exerted by the elastic element 5 on the elements 4 and 6, the elastic element 5 also exerts a pre-defined axial tensional force F on the elements 4 and 6, biasing them against each other. Accordingly, the teeth 73 and 74 of the annular arrangements 71 and 72 are kept in mutual positive engagement. Thereby, a rotation of the torque-adjustment piece 6 about the hinge axis A relative to the first bearing portion 31 and hence relative to the second hinge part 3 in a first direction R1 of rotation is prevented.

In order to apply an torsional pre-load to the elastic element 5 and to gradually increase this pre-load, the torque-adjustment piece 6 is rotated relative to the first bearing portion 31 about the hinge axis A a second direction R2 of rotation, opposite to the first direction R1, until the desired pre-loading moment is reached.

Due to the construction of the positive engagement device 7 as a ratchet device and by virtue of the sawtooth shape of the teeth 73 and 74, the teeth 73 and 74 slide along each other and thereby allow relative movement of the annular arrangements 71, 72 in the second direction R2 of rotation. Rotating the torque-adjustment piece 6 requires to overcome the elastic torsional moment or torque provided by the elastic element 5 and, in addition, to overcome the axial elastic force F and make the teeth 73, 74 slide with respect to each other.

Accordingly, the annular arrangements 71, 72 of teeth 73, 74 are capable of being disengaged from each other against the elastic action of the elastic element 5 for rotation in the direction R2.

During adjustment of the pre-load, the scale 37 and the index 65 provide a scale reading that directly or indirectly indicates the torsional pre-load applied to the elastic element 5. This advantageously makes it possible for the operator to quickly verify whether the desired pre-load for a given door 107 has been reached or not.

In the embodiment described with reference to Figs. 3-4, the torque-adjustment piece 6 is provided with an operating section 66, which is shaped in exemplary manner as an axial extension of the torque-adjustment piece 6. Preferably, the operating section 66 is formed in one piece with the torque-adjustment piece 6.

The operating section 66 in Figs. 3, 4 is adapted to be gripped by an operator and pulled in a release direction R along the axis A and away from the first bearing portion 31. In this way, the teeth 73, 74 of the arrangements 71, 72 are disengaged from each other against the axial elastic action of the elastic element 5, rotation in direction R1 of the torque-adjustment piece 6 relative to the first bearing portion 31 becomes possible, and the torsional pre-load is released and reset to zero. Then, a desired pre-load can be set by rotating the piece 6 in direction R2 again.

Once adjusted, the desired pre-load is reliably maintained due to the engaged saw-tooth shaped teeth 73, 74 of the positive engagement device 7. This engagement is reliably maintained by the axial tension F, which holds the arrangements 71, 72 and thus the piece 6 and the bearing portion 31 in place, relative to each other.

The rotation of the torque-adjustment piece 6 in the second direction R2 and the release of the pre-load by movement of the piece 6 in the direction R can in some variants be accomplished by hand by the operator.

Yet, it may in some variants be advantageous to shape the torque-adjustment piece 6 and/or the operating section 66 in such a manner that rotating the torque-adjustment piece 6 about the hinge axis A in the direction R2 requires the use of a simple standard tool, such as a conventional screw driver that is contained in a usual toolbox.

Further, the torque-adjustment piece 6 or its operating section 66 may also be designed in such a manner that moving the piece 6 in the direction R requires the use of such a standard tool.

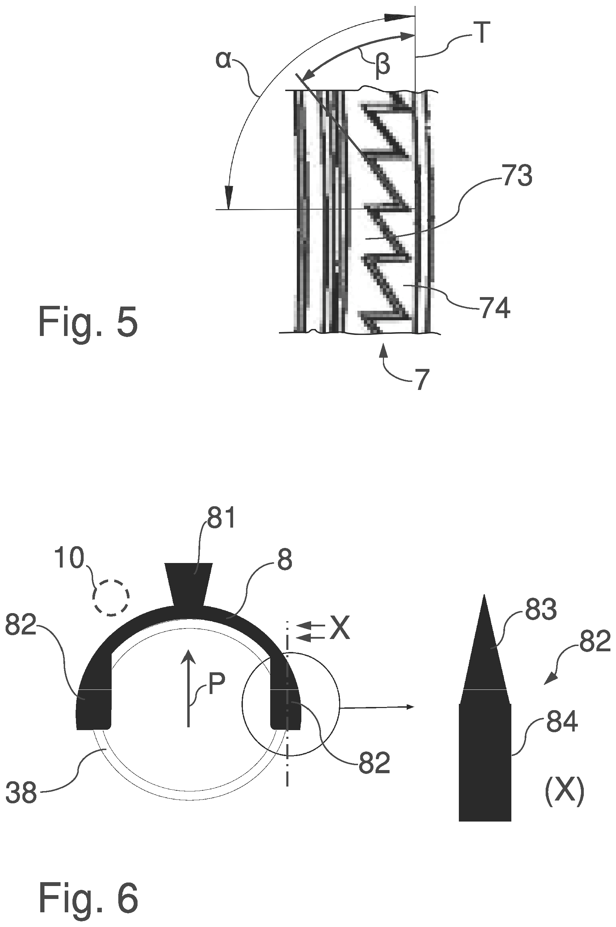

In a modification of the embodiment of Figs. 3 and 4, the hinge assembly 1 further comprises a release element 8, see Fig. 6. Using the release element 8, the positive engagement device 7 can be disengaged for release of the torsional pre-load in an even more convenient manner. The release element 8, generally shaped like an inverted U, comprises a centrally arranged operating section 81 and end sections 82 symmetrically arranged with respect to a direction P, which extends transverse to the axis A and intersects with the axis A. Each end section 82 comprises a wedge-shaped portion 83 and a wide portion 84.

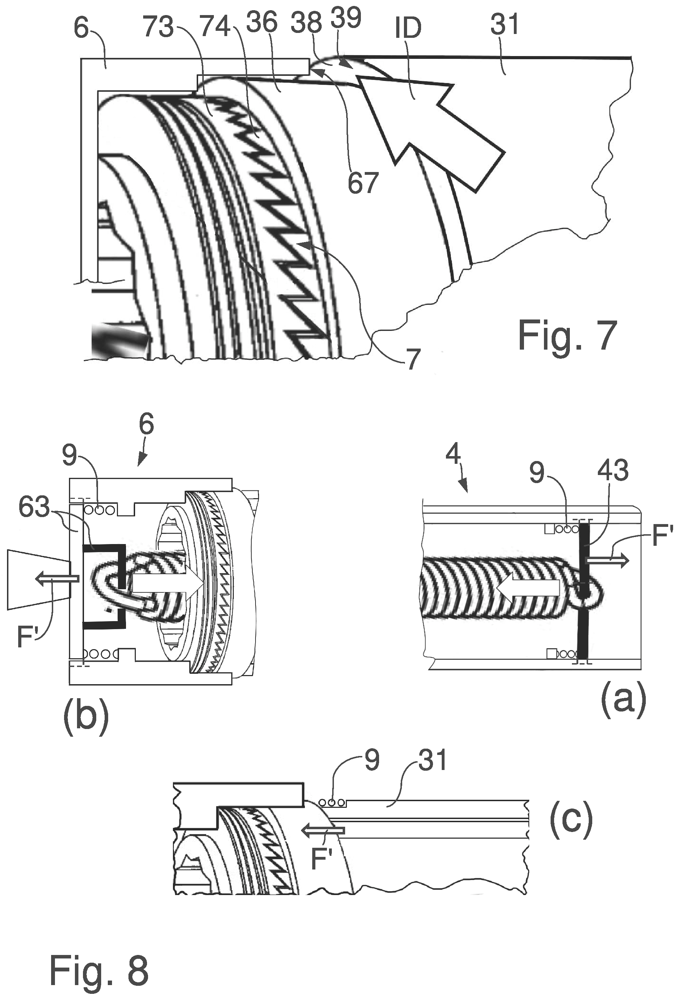

In order to disengage the positive engagement device 7 for resetting the torsional pre-load applied to the elastic element 5 in this modification, the wedge-shaped portions 83 can each be moved between an axial face 67 of the torque-adjustment piece 6 and an axial face 39 of the first bearing portion 31. In order to provide the axial face 39 which is oriented towards the axial face 67, the first bearing portion 31 is in this modification provided with a peripheral shoulder 38. Fig. 7 shows the shoulder 38, the faces 39 and 67, as well as an insertion direction ID that schematically illustrates how the wedge-shaped portions 83 are inserted between the faces 39 and 67. In order to enable simple insertion of the wedge-shaped portions 83, the axial faces 39 and 67 are spaced apart from each other by a gap.

Using the wedge-shaped portions 83 and the wide portion 84, the axial faces 39 and 67 are pushed apart from each other, the annular arrangements 71, 72 of teeth 73, 74 are disengaged, and the pre-load is reset. The thickness of the wide portions 84 is selected to be slightly superior to the axial height of the teeth 73, 74, and the wedge profile of the portions 83 is selected accordingly.

With the exception of the end sections 82, the release element 8 may be formed with a flat shape, having a thickness in the direction of the hinge axis A that is significantly smaller than that of the wide portion 84 and can be accommodated in the gap between the axial faces 39, 67 when the positive engagement device 7 is engaged.

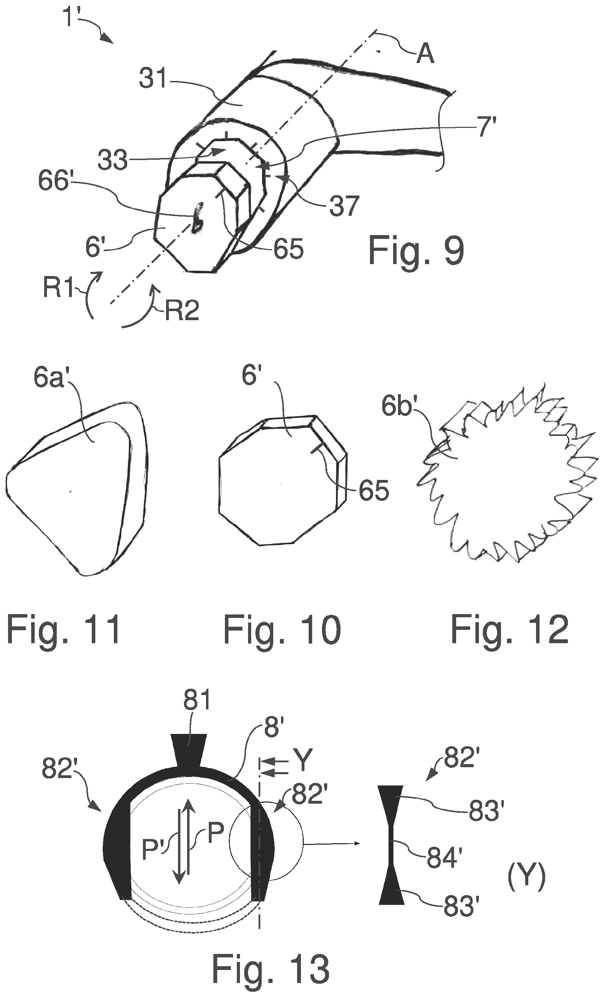

A release element 8' in accordance with a further modification is displayed schematically in Fig. 13. The release element 8' is securely held on the end section 36 of the first bearing portion 31 in the gap between the faces 67 and 39 of Fig. 7. End sections 82', symmetrically arranged with respect to the direction P, are provided with a narrow middle portion 84' and adjacent wedge-shaped portions 83' each widening in a direction away from the middle portion 84'. Thus, the element 8' can be either pulled in direction P or pushed in a direction P' opposite to direction P to disengage the positive engagement device 7.

In particular, the shape of the release element 8 or 8' is chosen to restrict movement thereof with respect to first bearing portion 31, in particular, e.g. in direction P and P'. For example, the release element 8', having the double-sided wedge profile with a reduced thickness in the narrow portion 84', can in a variant be closed to form a closed ring. This variant is indicated in Fig. 13 by dashed lines. The element 8' can be used to disengage the ratchet device 7 in both directions P, P', but is never loose.

Additionally or alternatively, the second hinge part 3, or the piece 6, may in some embodiments be provided with an extremity that restricts movement, in particular radial movement in direction P, of the release element 8, 8'. For the U-shaped release element 8, an extremity 10 of this kind is shown in exemplary manner in dashed lines, wherein extremity 10 is a lateral portion of the second hinge part 3.

The release element 8 or 8' may be operated manually, using the operating section 81 for pushing or pulling, or the release element 8 or 8' may be operated using a simple tool.

Using the release element 8 or 8', use of material for the torque-adjustment piece 6 can be reduced and a comfortable, toolless reset of the torsional pre-load is made possible. Also, as described, the release element 8, 8' is prevented from getting lost.

In another modification, it is conceivable to move the piece 6 away from the bearing portion 31 for disengaging the positive engagement device 7 by squeezing the tip of a screw driver between the faces 39 and 67, in order to push them apart.

In some embodiments, increasing torsional pre-load applied to the elastic element 5 may lead to a reduction in axial tension F. In a further variant of the embodiments, variants and modifications described above, the sawtooth shape of the teeth 73 and 74 therefore may be modified in order to further improve the axial self-locking effect of the positive engagement device 7. The torsional moment exerted by the elastic element 5 can be used to further lock the annular arrangements 71, 72 of teeth 73, 74. In order to provide a coupling between the torsional moment and the longitudinal locking along the hinge axis A, the peripheral saw-tooth profile is modified to be self-locking.

The teeth 73, 74 are arranged along a circular path. In order to provide a self-locking saw-tooth shape, both the forward face and the backward face of each tooth 73, 74 are inclined at an angle of less than 90 degrees with respect to a direction T that is tangential with respect to the path at the location of the tooth 73 or 74. Fig. 5 illustrates the case of an angle α of the forward face of substantially 90 degrees and of an angle β of the backward face of considerably less than 90 degrees, which is the situation in Fig. 4. In the self-locking modification just described, the angles α and β are each smaller than 90 degrees, with β < α.

In another variant of the embodiments described above, the hinge assembly 1 may comprise an additional elastic element 9 configured and arranged so as to elastically apply an additional tensional load on the elastic element 5 in a direction of stretching the elastic element 5 along the hinge axis A. Thereby, an effect of reduction of the tensional force F exerted by the elastic element 5 due to increasing torsional pre-load can be countered. The additional elastic element 9 may also be a coil spring. Examples of such variants are illustrated in schematic manner in Fig. 8. For instance, the additional elastic element 9 may be arranged between the holding element 43 and a sleeve body of the pivot axle 4, see Fig. 8 (a), wherein the holding element 43 is arranged to be axially movable but rotationally fixed relative to the sleeve body of the axle 4. Alternatively, the holding element 63 may be arranged so as to be axially movable and rotationally fixed relative to the rest of the torque-adjustment piece 6, and the additional elastic element 9 may be arranged so as to axially bias the movable holding element 63 in a manner additionally stretching the elastic element 5, see Fig. 8 (b). Further alternatively, the second annular arrangement 72 of teeth 74 may be formed on an element separate from the first bearing portion 31, that separate element may be ring-shaped and axially movable as well as rotationally fixed on the end section 36 and axially biased by the additional elastic element 9 against the first bearing portion 31, see Fig. 8 (c). An axial force F' provided by the elastic element 9 is schematically indicated in Fig. 8. The additional axial force F' helps to adjust the distance between the ends of the elastic element 5.

Fig. 9 displays part of a hinge assembly 1' in accordance with another embodiment of the invention, which may be used to pivotably attach the door 107 in Fig. 2, instead of the hinge assembly 1. In the following, the differences of the hinge assembly 1' in comparison with the hinge assembly 1 explained above will be described.

Instead of a positive engagement device 7 in the form of a ratchet device, the hinge assembly 1' comprises a positive engagement device 7' including two elements that form-fittingly match and, when engaged, are capable of blocking rotation in both directions of rotation R1, R2 around the hinge axis A. More specifically, in Fig. 9, the positive engagement device 7' comprises a torque-adjustment piece 6' that has an outer contour in the form of a regular octagon. The passage 33 of the first bearing portion 31 is modified and includes an outer end region that is provided with an inner octagonal cross-sectional shape which matches the outer contour of the piece 6'. Thus, the torque-adjustment piece 6' can be inserted into the end region of the passage 33, and after insertion, rotations R1, R2 both are prevented by positive engagement.

The second end 52 of the elastic element 5 is connected in a torque-transmitting manner with the torque-adjustment piece 6'.

Further, in Fig. 9, the torque-adjustment piece 6', shown also in Fig. 10 as a separate part, is provided with an index 65, and the outer end face of the first bearing portion 31 around the passage 33 is provided with a scale 37, in the manner described above.

In order to adjust the torque provided by the elastic element 5, the torque-adjustment piece 6' is axially pulled out of the passage 33 by an operator against the tensional force F exerted by the elastic element 5. For this purpose, the torque-adjustment piece 6' is provided with an operating section 66', which may for instance be formed as a hook or rib that can be gripped or engaged by a tool, e.g. a standard tool such as pliers or a screw driver.

Then, the torque-adjustment piece 6' can be rotated around the hinge axis A in the direction R2 against the torque provided by the elastic element 5 in order to increase and thereby set the torsional pre-load.

When the desired pre-load is set, as indicated by the scale 37 and index 65, the torque-adjustment piece 6' inserted again into the passage 33 in its new rotational position. After insertion, the positive engagement device 7' formed by the matching contours of the end region of the passage 33 and torque-adjustment piece 6' prevent rotation in both directions R1 and R2. The torque-adjustment piece 6' is kept in positive engagement with the first bearing portion 31 by the elastic axial action F of the elastic element 5. Resetting the pre-load is possible by pulling the torque-adjustment piece 6' out of the end of the passage 33 again.

The outer geometry of the torque-adjustment piece 6' can be different from an octagonal geometry, depending on the desired gradation or stepping of the selectable pre-loads and further depending on the behaviour and characteristic of the elastic element 5. For instance, the outer contour of a torque-adjustment piece 6a', which might be used in the assembly of Fig. 9, could be triangular, see Fig. 11, or a torque-adjustment piece 6b' could be provided in a regular manner with a plurality of longitudinal ribs on its periphery, as schematically shown in Fig. 12. In the case of each of Figs. 11 and 12, the end region of the passage 33 is adapted to match the outer contour of the piece 6a' or 6b', respectively.

The hinge assemblies 1, 1' described above are robust with regard to changes in pre-load due to vibration, as an elastic action is in each case provided which keeps the positive engagement device 7, 7' engaged. The elastic action may include, as described, axial tension exerted by the elastic element 5, elastic torsional moment exerted by the elastic element 5, an additional axial force due to an angle α < 90 degrees and the elastic torsional moment, and/or an axial force provided by the additional elastic element 9. Also, with the hinge assemblies 1, 1', loosening or loss of individual parts thereof is avoided.

Although the hinge assemblies 1, 1' are described herein in relation to doors 107 for overhead storage compartments 102, each hinge assembly 1, 1' and the above-described variants and modifications thereof may be used to pivotably connect components of other kinds within an aircraft or spacecraft cabin. For instance, the hinge assembly 1 or 1' can be used to pivotably attach a door of another kind of storage compartment or monument that is provided for installation in an aircraft or spacecraft cabin.

Although the invention has been completely described above with reference to preferred embodiments, the invention is not limited to these embodiments but may be modified in many ways.

The following further embodiments of the invention are disclosed herein:

### Embodiment E1:

Hinge assembly (1; 1') for pivotably coupling two components in an aircraft or spacecraft cabin, in particular for pivotably attaching an openable and closeable door (107) of an overhead storage compartment (102), the hinge assembly (1; 1') comprising a first hinge part (2) and a second hinge part (3) arranged and coupled so as to be pivotable relative to each other about a hinge axis (A), an elastic element (5) capable of providing an elastic torque about the hinge axis (A), and a torque-adjustment piece (6; 6', 6a', 6b');
wherein one of the first and second hinge parts (2, 3) is adapted to be attached to a first one of the components and the other one of the first and second hinge parts (2, 3) is adapted to be attached to a second one of the components; wherein the elastic element (5) is coupled to each of the first hinge part (2) and the torque-adjustment piece (6; 6', 6a', 6b') in a torque-transmitting manner; and wherein the hinge assembly (1; 1') includes a positive engagement device (7; 7') that is configured to be kept positively engaged by elastic action so as to prevent a rotation of the torque-adjustment piece (6; 6', 6a', 6b') about the hinge axis (A) relative to the second hinge part (3) at least in a first direction of rotation (R1), and that is capable of being disengaged against the elastic action so as to enable a rotation of the torque-adjustment piece (6; 6', 6a', 6b') about the hinge axis (A) relative to the second hinge part (3) in a second direction of rotation (R2) opposite to the first direction of rotation (R1) against a torque provided by the elastic element (5) in order to apply a torsional pre-load to the elastic element (5).

### Embodiment E2:

Hinge assembly according to embodiment E1, characterized in that the positive engagement device (7) is a ratchet device
that is capable of preventing the rotation of the torque-adjustment piece (6) about the hinge axis (A) relative to the second hinge part (3) in the first direction of rotation (R1) and
that enables the rotation of the torque-adjustment piece (6) about the hinge axis (A) relative to the second hinge part (3) in the second direction of rotation (R2) against the torque provided by the elastic element (5).

### Embodiment E3:

Hinge assembly according to embodiment E1 or E2, characterized in that the positive engagement device (7; 7') is configured to enable selective release of the torque-adjustment piece (6; 6', 6a', 6b') for rotation thereof about the hinge axis (A) relative to the second hinge part (3) in the first direction of rotation (R1) and thereby to enable resetting the torsional pre-load applied to the elastic element (5).

### Embodiment E4:

Hinge assembly according to at least one of the preceding embodiments E1 to E3, characterized in that the hinge assembly (1; 1') comprises a pivot axle (4) that is coupled or connected with the first hinge part (2) in a torque-transmitting manner and in that the second hinge part (3) comprises a bearing portion (31) that at least partially accommodates the pivot axle (4) in a pivotable manner, and in particular in that the pivot axle (4) is formed as a sleeve and the elastic element (5) is accommodated at least partially inside the sleeve.

### Embodiment E5:

Hinge assembly according to embodiment E4, characterized in that the torque-adjustment piece (6) is cap-shaped, comprises an inner space or axial recess (61) and accommodates an end (36) of the bearing portion (31) of the second hinge part (2) in the inner space or axial recess (61).

### Embodiment E6:

Hinge assembly according to embodiment E4 or E5, characterized in that a first end (51) of the elastic element (5) is connected to the pivot axle (4) in a manner so as to transmit torque about the hinge axis (A) and further in that a second end (52) of the elastic element (5) is coupled to the torque-adjustment piece (6; 6', 6a', 6b') in a manner so as to transmit torque about the hinge axis (A).

### Embodiment E7:

Hinge assembly according to at least one of the preceding embodiments E1 to E6, characterized in that the positive engagement device (7) comprises a first annular arrangement (71) of teeth (73) provided on the torque-adjustment piece (6) and a second annular arrangement (72) of teeth (74) provided on the second hinge part (3), wherein the teeth (73, 74) of the first and second annular arrangements (71, 72) are configured to engage with each other to prevent relative rotation of the annular arrangements (71, 72) in the first direction of rotation (R1) and to slide along each other so as to allow relative movement of the annular arrangements (71, 72) in the second direction of rotation (R2), and in particular in that the teeth (73, 74) of the first and second annular arrangements (71, 72) are each provided with a sawtooth shape.

### Embodiment E8:

Hinge assembly according to embodiment E7, characterized in that the elastic element (5) additionally provides an axial elastic force (F) along the hinge axis (A) as a tensional force so as to elastically bias the first and second arrangements (71, 72) of teeth (73, 74) against each other.

### Embodiment E9:

Hinge assembly according to embodiment E7 or E8, characterized in that the first annular arrangement (71) of teeth (73) is formed on an inner peripheral shoulder (62) of the torque-adjustment piece (6).

### Embodiment E10:

Hinge assembly according to at least one of embodiments E7 to E9 in conjunction with embodiment E4, characterized in that the second annular arrangement (72) of teeth (74) is formed on an outwardly-oriented end section (36) of the bearing portion (31) of the second hinge part (3) and in that the first annular arrangement (71) of teeth (73) on the torque-adjustment piece (6) is oriented towards the bearing portion (31).

### Embodiment E11:

Hinge assembly according to at least one of the preceding embodiments E1 to E10, characterized in that one of the second hinge part (3) and the torque-adjustment piece (6; 6', 6a', 6b') is provided with a scale (37) and the other of the second hinge part (3) and the torque-adjustment piece (6; 6', 6a', 6b') is provided with an index (65), wherein the scale (37) and the index (65) cooperate to provide a scale reading that directly or indirectly indicates the torsional pre-load applied to the elastic element (5) by rotating the torque-adjustment piece (6; 6', 6a', 6b') relative to the second hinge part (3).

### Embodiment E12:

Hinge assembly according to at least one of the preceding embodiments E1 to E11, characterized in that the torque-adjustment piece (6; 6', 6a', 6b') is configured with an operating section (66; 66'), wherein using the operating section (66; 66'), the torque-adjustment piece (6; 6', 6a', 6b') can be axially moved, in particular pulled, by an operator along the hinge axis (A) in order to disengage the positive engagement device (7; 7') for resetting the torsional pre-load.

### Embodiment E13:

Hinge assembly according to at least one of the preceding embodiments E1 to E12, characterized in that the hinge assembly (1) further comprises a release element (8; 8') that is provided with a wedge-shaped portion (83; 83'), wherein the release element (8; 8') is movably arranged in such a way that the wedge-shaped portion (83; 83') can be pushed or pulled between an axial face (67) of the torque-adjustment piece (6) and an axial face (39) of the second hinge part (3), in particular along a direction (P, P') transverse to the hinge axis (A), in order to move the torque-adjustment piece (6) and the second hinge part (3) apart and thereby to reset the torsional pre-load.

### Embodiment E14:

Hinge assembly according to at least one of the preceding embodiments E1 to E13, characterized in that the first annular arrangement (71) of teeth (73) is integrally formed with the torque-adjustment piece (6) and in that the second annular arrangement (72) of teeth (74) is integrally formed with the second hinge part (3).

### Embodiment E15:

Storage compartment (102) or monument for installation in an aircraft or spacecraft cabin, comprising two components (107, 103) pivotably coupled to each other by a hinge assembly (1; 1') in accordance with at least one of embodiments E1 to E14.

### LIST OF REFERENCE SIGNS

- 1, 1': hinge assembly
- 2: first hinge part
- 3: second hinge part
- 4: pivot axle
- 5: elastic element
- 6, 6': torque-adjustment piece
- 6a': torque-adjustment piece
- 6b': torque-adjustment piece
- 7, 7': positive engagement device
- 8, 8': release element
- 9: additional elastic element
- 10: extremity
- 21: receiving portion
- 22: passage
- 23: internal toothing or arrangement of grooves
- 24: attachment section
- 30: space
- 31: first bearing portion
- 32: second bearing portion
- 33: passage
- 34: passage
- 35: attachment section
- 36: end section
- 37: scale
- 38: shoulder
- 39: axial face
- 41: outer toothing or arrangement of ribs
- 42: passage
- 43: holding element
- 51: first end
- 52: second end
- 61: inner space or recess
- 62: inner peripheral shoulder
- 63: holding element
- 65: index
- 66: operating section
- 66': operating section
- 67: axial face
- 71: first arrangement of teeth
- 72: second arrangement of teeth
- 73: tooth
- 74: tooth
- 81: operating section
- 82: end section
- 82': end section
- 83: wedge-shaped portion
- 83': wedge-shaped portion
- 84: wide portion
- 84': narrow portion
- 100: aircraft
- 101: fuselage
- 102: overhead storage compartment
- 103: top wall
- 104: side wall
- 105: bottom wall
- 106: rear wall
- 107: door
- 108: latching device
- A: hinge axis
- F, F': axial force
- ID: insertion direction
- P, P': direction transverse to the hinge axis
- R1: first direction of rotation
- R2: second direction of rotation
- R: release direction
- T: tangential direction

## Claims

1. Hinge assembly (1) for pivotably coupling two components in an aircraft or spacecraft cabin, in particular for pivotably attaching an openable and closeable door (107) of an overhead storage compartment (102), the hinge assembly (1) comprising a first hinge part (2) and a second hinge part (3) arranged and coupled so as to be pivotable relative to each other about a hinge axis (A), an elastic element (5) capable of providing an elastic torque about the hinge axis (A), and a torque-adjustment piece (6);
wherein one of the first and second hinge parts (2, 3) is adapted to be attached to a first one of the components and the other one of the first and second hinge parts (2, 3) is adapted to be attached to a second one of the components;
wherein the elastic element (5) is coupled to each of the first hinge part (2) and the torque-adjustment piece (6) in a torque-transmitting manner; and
wherein the hinge assembly (1) includes a positive engagement device (7)
that is configured to be kept positively engaged by elastic action so as to prevent a rotation of the torque-adjustment piece (6) about the hinge axis (A) relative to the second hinge part (3) at least in a first direction of rotation (R1), and
that is capable of being disengaged against the elastic action so as to enable a rotation of the torque-adjustment piece (6) about the hinge axis (A) relative to the second hinge part (3) in a second direction of rotation (R2) opposite to the first direction of rotation (R1) against a torque provided by the elastic element (5) in order to apply a torsional pre-load to the elastic element (5);
wherein the hinge assembly comprises a ratcheting mechanism as the positive engagement device, wherein the ratcheting mechanism is configured in the manner of a ratcheting mechanism of a ratcheting wrench, the ratcheting mechanism including an arrangement of teeth and a ratchet pawl.

2. Hinge assembly according to claim 1, **characterized in that** the positive engagement device (7) is a ratchet device
that is capable of preventing the rotation of the torque-adjustment piece (6) about the hinge axis (A) relative to the second hinge part (3) in the first direction of rotation (R1) and
that enables the rotation of the torque-adjustment piece (6) about the hinge axis (A) relative to the second hinge part (3) in the second direction of rotation (R2) against the torque provided by the elastic element (5).

3. Hinge assembly according to claim 1 or 2, **characterized in that** the positive engagement device (7) is configured to enable selective release of the torque-adjustment piece (6) for rotation thereof about the hinge axis (A) relative to the second hinge part (3) in the first direction of rotation (R1) and thereby to enable resetting the torsional pre-load applied to the elastic element (5).

4. Hinge assembly according to at least one of the preceding claims, **characterized in that** the ratcheting mechanism is provided with a reverse mechanism that can be used to selectively enable the torque-adjustment piece (6) to rotate about the hinge axis (A) relative to the second hinge part (3) in the first direction of rotation (R1) in order to reset the torsional pre-load applied to the elastic element (5).

5. Hinge assembly according to at least one of the preceding claims, **characterized in that** the hinge assembly (1) comprises a pivot axle (4) that is coupled or connected with the first hinge part (2) in a torque-transmitting manner and **in that** the second hinge part (3) comprises a bearing portion (31) that at least partially accommodates the pivot axle (4) in a pivotable manner, and in particular **in that** the pivot axle (4) is formed as a sleeve and the elastic element (5) is accommodated at least partially inside the sleeve.

6. Hinge assembly according to claim 5, **characterized in that** the torque-adjustment piece (6) is cap-shaped, comprises an inner space or axial recess (61) and accommodates an end (36) of the bearing portion (31) of the second hinge part (2) in the inner space or axial recess (61).

7. Hinge assembly according to claim 5 or 6, **characterized in that** a first end (51) of the elastic element (5) is connected to the pivot axle (4) in a manner so as to transmit torque about the hinge axis (A) and further **in that** a second end (52) of the elastic element (5) is coupled to the torque-adjustment piece (6) in a manner so as to transmit torque about the hinge axis (A).

8. Hinge assembly according to at least one of the preceding claims, **characterized in that** the elastic element (5) is a coil spring, in particular a helical torsion spring.

9. Hinge assembly according to at least one of the preceding claims, **characterized in that** one of the second hinge part (3) and the torque-adjustment piece (6) is provided with a scale (37) and the other of the second hinge part (3) and the torque-adjustment piece (6) is provided with an index (65), wherein the scale (37) and the index (65) cooperate to provide a scale reading that directly or indirectly indicates the torsional pre-load applied to the elastic element (5) by rotating the torque-adjustment piece (6) relative to the second hinge part (3).

10. Storage compartment (102) or monument for installation in an aircraft or spacecraft cabin, comprising two components (107, 103) pivotably coupled to each other by a hinge assembly (1) in accordance with at least one of claims 1 to 9.
